# FASCICULE DE BREVET EUROPEEN

(11) **EP 1 227 746 B1**
(45) Date de publication et mention de la délivrance du brevet: **06.07.2005**
(21) Numéro de dépôt: 01974398.8
(22) Date de dépôt: 27.09.2001
(51) Int. Cl.: A47J 43/07

(54) **RANGE CORDON POUR APPAREIL ELECTROMENAGER DE PREPARATION CULINAIRE**
KÜCHENMASCHINE MIT EINEM RAUM ZUM LAGERN DES ANSCHLUSSKABELS
CABLE HOLDER FOR ELECTRICAL HOUSEHOLD FOOD PROCESSOR

(30) Priorité: 04.10.2000 FR 0012689
(43) Date de publication de la demande: 07.08.2002
(73) Titulaire: SEB S.A., 69130 Ecully (FR)
(72) Inventeur: MACABIAU, Serge, F-65310 Horgues (FR); TOMPA, Carole, F-65000 Tarbes (FR); PEYRAS, Lionel, F-65100 Jarret (FR)
(86) Numéro de dépôt international: PCT/FR2001/002991
(87) Numéro de publication internationale: WO 2002/028247

(56) Documents cités:
- EP-A- 0 541 320
- EP-A- 0 678 268
- DE-A- 19 737 131
- GB-A- 1 558 399
- US-A- 5 533 797

## Description

La présente invention concerne le domaine technique général des appareils électroménagers de préparation culinaire et concerne plus particulièrement, mais non exclusivement, les appareils comportant une transmission par courroie.

Les appareils du type précité comportent un boîtier comprenant une partie formant un socle prévu pour recevoir un récipient de travail, adjacente à une autre partie de hauteur plus importante, dans laquelle est disposé un moteur électrique. Le moteur entraîne un axe portant un pignon actionnant, par l'intermédiaire d'une courroie, une roue disposée dans le socle, laquelle entraîne un outil de travail disposé dans le récipient de travail.

Usuellement de tels appareils sont dépourvus de rangement du cordon électrique.

Un appareil électroménager de préparation culinaire comportant un boîtier comprenant un moteur alimenté par un cordon électrique et un dispositif d'enroulement du cordon électrique est connu du document DE 1 97 37 131.

L'objet de la présente invention est de proposer un dispositif pour le rangement du cordon électrique dans un appareil électroménager de préparation culinaire, dont la construction soit peu onéreuse.

Un autre objet de la présente invention est de proposer un dispositif pour le rangement du cordon électrique dans un appareil électroménager de préparation culinaire, dont l'encombrement soit réduit.

Ces objets sont atteints avec un appareil électroménager de préparation culinaire comportant un boîtier comprenant un moteur alimenté par un cordon électrique et entraînant un outil de travail, le cas échéant par l'intermédiaire d'une transmission, du fait que le ledit boîtier comporte un fond sous la face extérieure duquel s'étend au moins une aspérité décentrée, telle qu'un bossage ou une portion de nervure, une moitié du fond comprenant au moins deux moyens de retournement du cordon électrique disposés de part et d'autre de l'aspérité, l'autre moitié du fond comprenant au moins un moyen de retournement du cordon électrique. Grâce à ces dispositions, le cordon électrique peut alors être enroulé selon un chemin incluant une portion en forme de U ou de V, ce qui permet de contourner l'obstacle présenté par l'aspérité décentrée.

Selon une forme de réalisation, l'un au moins des moyens de retournement est formé par un plot issu du fond.

Selon une autre forme de réalisation, l'un au moins des moyens de retournement est formé par un bord latéral d'un prolongement de l'aspérité.

Avantageusement, l'un au moins des moyens de retournement peut comporter un crochet prévu pour retenir le cordon électrique.

Avantageusement, le fond comprend une cavité prévue pour le rangement du cordon électrique, dans laquelle sont disposés les moyens de retournement.

Ces objets sont également atteints avec un appareil électroménager de préparation culinaire comportant un boîtier comprenant un moteur alimenté par un cordon électrique et entraînant un outil de travail, le cas échéant par l'intermédiaire d'une transmission, du fait que ledit boîtier comporte un fond sous lequel est ménagée une cavité de réception du cordon électrique dans laquelle s'étend au moins une aspérité décentrée, telle qu'un bossage ou une portion de nervure, la cavité comportant deux espaces disposés de part et d'autre de l'aspérité et reliés l'un à l'autre par un passage contournant l'aspérité. Grâce à ces dispositions, le cordon électrique peut alors également être enroulé selon un chemin incluant une portion en forme de U ou de V, ce qui permet de contourner l'obstacle présenté par l'aspérité décentrée.

Avantageusement dans un boîtier conforme à l'une au moins des dispositions précédentes, un axe de la transmission ou du moteur peut être logé au moins partiellement à l'intérieur de l'aspérité, cette construction permettant de réduire la hauteur du boîtier en utilisant la place disponible latéralement au logement de l'axe pour le rangement du cordon électrique.

Avantageusement alors, l'aspérité est prolongée par une nervure longitudinale vers le centre du fond, cette construction permettant de rigidifier l'aspérité et le fond sans empiéter sur la place utilisée pour le rangement du cordon électrique.

Avantageusement encore, au moins une nervure de rigidification à partir de l'aspérité s'étend en direction d'un bord latéral du fond, cette construction permettant de rigidifier encore davantage l'aspérité et le fond.

Avantageusement alors, le bord latéral de la ou de l'une au moins des nervures de rigidification le plus proche du centre du fond forme un angle supérieur à 90° par rapport à une ligne reliant le centre de l'aspérité au centre du fond, cette construction permettant d'augmenter la place disponible pour le rangement du cordon électrique.

Avantageusement aussi, au moins une partie de la ou de l'une au moins des nervures de rigidification forme un angle inférieur à 135° par rapport à une ligne reliant le centre de l'aspérité au centre du fond, cette construction permettant de mieux rigidifier l'aspérité selon les directions transversales.

Avantageusement encore, un récipient de travail recevant l'outil de travail est disposé sur le boîtier.

L'invention sera mieux comprise à l'étude d'un exemple de réalisation, pris à titre nullement limitatif, et illustré dans les figures annexées dans lesquelles :
- la figure 1 est une vue schématique de coté d'un appareil électroménager de préparation culinaire à entraînement par courroie,
- la figure 2 est une vue en perspective de la pièce comportant le dispositif selon l'invention.

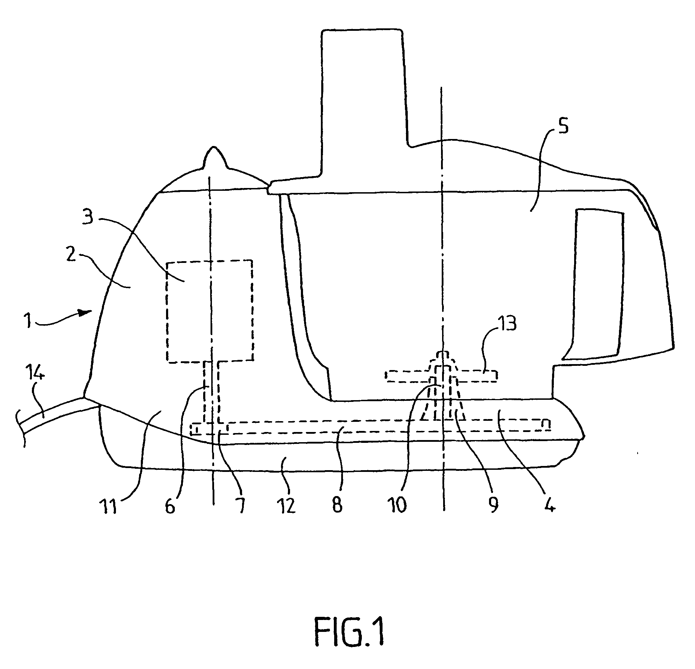

La figure 1 montre un appareil électroménager de préparation culinaire comportant un boîtier 1 formant un logement 2 de réception d'un moteur 3 adjacent à un socle 4 de réception d'un récipient de travail 5. Le moteur 3 entraîne un axe d'entraînement 6 portant un pignon 7. Une courroie 8 relie le pignon 7 à une roue 9 disposée dans le socle 4. La roue 9 est montée sur un axe 10 et est prévue pour entraîner un outil de travail rotatif 13 disposé dans le récipient 5.

Le boîtier 1 comporte deux pièces principales, à savoir un corps 11 monté sur une base 12. Le corps 11 et la base 12 sont de préférence réalisés en matière plastique et obtenus par moulage. Le moteur 3 et l'axe d'entraînement 6 sont montés dans le corps 11. L'axe 10 est monté dans la base 12. Un cordon électrique 14 est issu du boîtier 1.

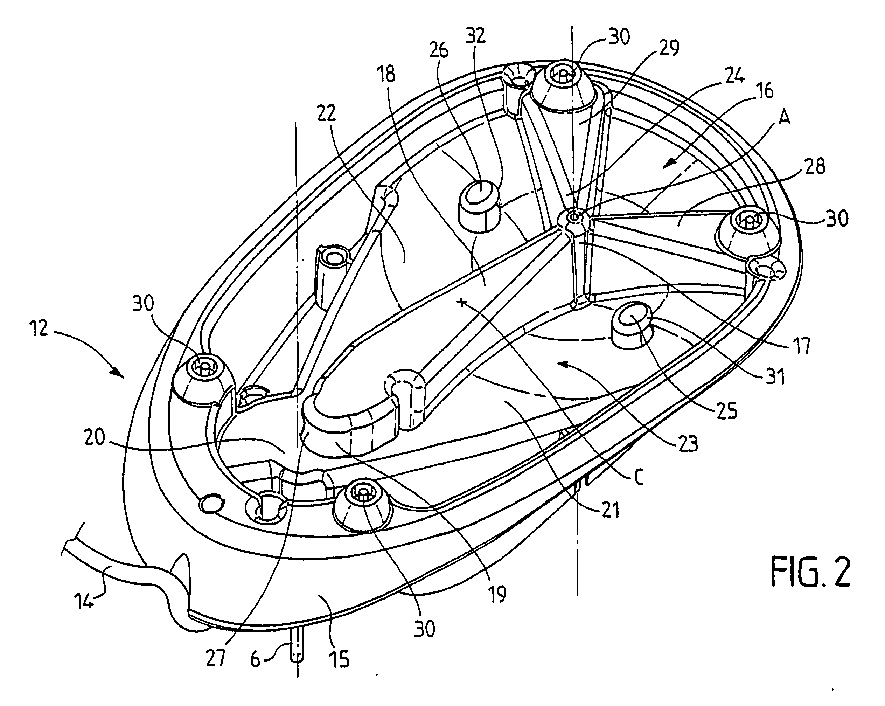

Tel que montré à la figure 2, la base 12 présente un fond 16 sous lequel sont disposés des pieds 30. Le fond 16 est entouré par un bord latéral périphérique 15. Un bossage 17 constitue un logement de réception d'au moins une partie de l'axe 10 de la roue 9 (non visibles sur la figure 2). Le bossage forme une aspérité 24 s'étendant sensiblement perpendiculairement sous la face extérieure du fond 16. De ce fait, le fond 16 est relevé par rapport à l'extrémité inférieure du bossage 17.

Le bossage 17 dans lequel est monté l'axe 10 est décentré par rapport au centre C du fond 16, du fait de la disposition latérale de l'axe d'entraînement 6 portant le pignon 7 par rapport à l'axe 10 de la roue 9, et du fait du souhait de limiter l'encombrement en longueur du boîtier 1 et donc du fond 16.

Une nervure 18 s'étendant longitudinalement sous le fond 16 forme un prolongement du bossage 17 en direction du centre C du fond 16 et de l'axe d'entraînement 6 de la courroie 8 (non visible sur la figure 2). Toutefois la nervure longitudinale 18 comporte à l'opposé du bossage 17 une extrémité frontale 19 s'arrêtant à distance de l'axe 6 et du bord latéral périphérique 15. La nervure 18 ménage ainsi avec la paroi intérieure du bord 15 un passage 20. De plus, la nervure 18 ménage deux espaces 21, 22 sous le fond 16, de part et d'autre de ses parois latérales longitudinales. Le passage 20 contourne l'aspérité 24 et son prolongement formés respectivement par le bossage 17 et la nervure 18, et relie les espaces 21 et 22 pour former une cavité 23 pouvant servir pour le rangement du cordon électrique 14.

Des moyens de retournement 25, 26, 27 sont prévus pour l'enroulement du cordon électrique 14 dans les espaces 21, 22 ainsi que dans le passage 20. Tel qu'illustré à la figure 2, les moyens de retournement 25, 26 sont disposés dans la moitié du fond comportant le bossage 17 formant l'aspérité 24, respectivement dans l'espace 21 et l'espace 22. Les moyens de retournement 25, 26 présentent chacun une forme de plot issu du fond 16 et comportant un crochet 31, 32. Le moyen de retournement 27 est disposé dans l'autre moitié du fond 16. Le moyen de retournement 27 est formé par l'extrémité frontale 19 de la nervure 18, laquelle constitue un bord latéral d'un prolongement de l'aspérité 24.

Deux nervures de rigidification 28, 29 relient le bossage 17 à la paroi inférieure du bord latéral périphérique 15. Les nervures 28, 29 s'étendent radialement à partir du bossage 17. Le bord latéral de chacune des nervures 28, 29 le plus proche du centre C du fond 16 forme un angle supérieur à 90° par rapport à la ligne joignant le centre A de l'aspérité 24 au centre C du fond. Les nervures 28, 29 forment un angle inférieur à 135° par rapport à la ligne joignant le centre A de l'aspérité 24 au centre C du fond. Tel qu'illustré à la figure 2, l'angle entre les axes médians des nervures 28, 29 et 18 est de l'ordre 120°.

L'utilisateur peut enrouler le cordon électrique 14 sous le fond 16 autour des moyens de retournement 25, 27, 26 selon une configuration en V dans l'espace 23. L'appareil offre ainsi une fonction très pratique de rangement du cordon, tout en restant compact.

De nombreuses améliorations et/ou modifications peuvent être apportées à ce dispositif dans le cadre des revendications.

A titre de variante, plusieurs moyens de retournement peuvent être prévus. Toutefois la présence de moyens de retournement dans les espaces et/ou le passage formant la cavité de rangement du cordon n'est pas indispensable.

A titre de variante, les moyens de retournement peuvent être issus des nervures, du fond ou de toute autre partie du boîtier.

A titre de variante, une ou plusieurs nervures de rigidification peuvent être prévues. Toutefois les nervures de rigidification ne rejoignent pas nécessairement le bord latéral du fond. Notamment, la présence d'un bord latéral périphérique autour du fond n'est pas indispensable.

A titre de variante, la cavité prévue pour le rangement du cordon peut être délimitée par un bord latéral périphérique discontinu et/ou par des plots formant par exemple les pieds du boîtier.

A titre de variante, l'aspérité peut être formée par une portion de nervure, n'incluant pas nécessairement un axe monté dans le boîtier.

A titre de variante, l'enveloppe du chemin d'enroulement du cordon peut présenter une forme en U au lieu d'une forme en V, et/ou comporter plus de deux brins, par exemple trois ou quatre brins dans le cas d'une forme en N ou en W.

## Revendications

1. Appareil électroménager de préparation culinaire, comportant un boîtier (1) comprenant un moteur (3) alimenté par un cordon électrique (14) et entraînant un outil de travail (13), le cas échéant par l'intermédiaire d'une transmission, **caractérisé en ce qu'**il comporte un fond (16) sous la face extérieure duquel s'étend au moins une aspérité (24) décentrée, telle qu'un bossage (17) ou une portion de nervure, une moitié du fond (16) comprenant au moins deux moyens de retournement (25, 26) du cordon électrique (14) disposés de part et d'autre de l'aspérité (24), l'autre moitié du fond (16) comprenant au moins un moyen de retournement (27) du cordon électrique (14).

2. Appareil électroménager de préparation culinaire selon la revendication 1, **caractérisé en ce que** l'un (25, 26) au moins des moyens de retournement est formé par un plot issu du fond (16).

3. Appareil électroménager de préparation culinaire selon l'une des revendications 1 ou 2, **caractérisé en ce que** l'un (27) au moins des moyens de retournement est formé par un bord latéral d'un prolongement de l'aspérité (24).

4. Appareil électroménager de préparation culinaire selon l'une des revendications 1 à 3, **caractérisé en ce** l'un (25, 26) au moins des moyens de retournement comporte un crochet (31, 32) prévu pour retenir le cordon électrique (14).

5. Appareil électroménager de préparation culinaire selon l'une des revendications 1 à 4, **caractérisé en ce que** le fond (16) comprend une cavité (23) prévue pour le rangement du cordon électrique (14), dans laquelle sont disposés les moyens de retournement (25, 26, 27).

6. Appareil électroménager de préparation culinaire, comportant un boîtier (1) comprenant un moteur (3) alimenté par un cordon électrique (14) et entraînant un outil de travail (13), le cas échéant par l'intermédiaire d'une transmission, **caractérisé en ce qu'**il comporte un fond (16) sous lequel est ménagée une cavité (23) de réception du cordon électrique (14) dans laquelle s'étend au moins une aspérité (24) décentrée, telle qu'un bossage (17) ou une portion de nervure, la cavité (23) comportant deux espaces (21, 22) disposés de part et d'autre de l'aspérité (24) et reliés l'un à l'autre par un passage (20) contournant l'aspérité (24).

7. Appareil électroménager de préparation culinaire selon l'une des revendications 1 à 6, **caractérisé en ce qu'**un axe (10) de la transmission ou du moteur est logé au moins partiellement à l'intérieur de l'aspérité (24).

8. Appareil électroménager de préparation culinaire selon l'une des revendications 1 à 7, **caractérisé en ce que** l'aspérité (24) est prolongée par une nervure longitudinale (18) vers le centre du fond (16).

9. Appareil électroménager de préparation culinaire selon l'une des revendications 1 à 8, **caractérisé en ce qu'**au moins une nervure de rigidification (28, 29) s'étend à partir de l'aspérité (24) en direction d'un bord latéral (15) du fond (16).

10. Appareil électroménager de préparation culinaire selon la revendication 9, **caractérisé en ce que** le bord latéral de la ou de l'une au moins des nervures de rigidification (28, 29) le plus proche du centre du fond forme un angle supérieur à 90° par rapport à une ligne reliant le centre de l'aspérité (24) au centre du fond (16).

11. Appareil électroménager de préparation culinaire selon l'une des revendications 9 ou 10, **caractérisé en ce qu'**au moins une partie de la ou de l'une au moins des nervures de rigidification (28, 29) forme un angle inférieur à 135° par rapport à une ligne reliant le centre de l'aspérité (24) au centre du fond (16).

12. Appareil électroménager de préparation culinaire, selon l'une des revendications 1 à 11, **caractérisé en ce qu'**un récipient de travail (5) recevant l'outil de travail (13) est disposé sur le boîtier (1).

## Patentansprüche

1. Elektrohaushaltsgerät zum Zubereiten von Nahrungsmitteln, mit einem Gehäuse (1), das einen Motor (3) aufweist, der von einer Leitungsschnur (14) gespeist wird und ein Arbeitswerkzeug (13) gegebenenfalls über ein Getriebe antreibt, **dadurch gekennzeichnet, dass** es einen Boden (16) aufweist, unter dessen Außenfläche sich mindestens eine exzentrische Unebenheit (24) wie etwa eine Erhebung (17) oder ein Rippenabschnitt erstreckt, wobei eine Hälfte des Bodens (16) mindestens zwei Mittel (25, 26) zum Umlenken der Leitungsschnur (14) aufweist, die auf der einen und auf der anderen Seite der Unebenheit (24) angeordnet sind, und wobei die andere Hälfte des Bodens (16) mindestens ein Mittel (27) zum Umlenken der Leitungsschnur (14) aufweist.

2. Elektrohaushaltsgerät zum Zubereiten von Nahrungsmitteln nach Anspruch 1, **dadurch gekennzeichnet, dass** mindestens eines (25, 26) der Umlenkmittel durch einen Kontakt gebildet ist, der aus dem Boden (16) hervorgeht.

3. Elektrohaushaltsgerät zum Zubereiten von Nahrungsmitteln nach Anspruch 1 oder 2, **dadurch gekennzeichnet, dass** mindestens eines (27) der Umlenkmittel durch einen Seitenrand einer Verlängerung der Unebenheit (24) gebildet ist.

4. Elektrohaushaltsgerät zum Zubereiten von Nahrungsmitteln nach einem der Ansprüche 1 bis 3, **dadurch gekennzeichnet, dass** mindestens eines (25, 26) der Umlenkmittel einen Haken (31, 32) aufweist, der zum Halten der Leitungsschnur (14) vorgesehen ist.

5. Elektrohaushaltsgerät zum Zubereiten von Nahrungsmitteln nach einem der Ansprüche 1 bis 4, **dadurch gekennzeichnet, dass** der Boden (16) einen Hohlraum (23) aufweist, der dazu vorgesehen ist, die Leitungsschnur (14) unterzubringen, und in dem die Umlenkmittel (25, 26, 27) angeordnet sind.

6. Elektrohaushaltsgerät zum Zubereiten von Nahrungsmitteln mit einem Gehäuse (1), das einen Motor (3) aufweist, der von einer Leitungsschnur (14) gespeist wird und ein Arbeitswerkzeug (13) gegebenenfalls über ein Getriebe antreibt, **dadurch gekennzeichnet, dass** es einen Boden (16) aufweist, unter dem ein Hohlraum (23) zur Aufnahme der Leitungsschnur (14) ausgebildet ist, in dem sich mindestens eine exzentrische Unebenheit (24) wie etwa eine Erhebung (17) oder ein Rippenabschnitt erstreckt, wobei der Hohlraum (23) zwei Bereiche (21, 22) aufweist, die auf der einen und auf der anderen Seite der Unebenheit (24) angeordnet und durch einen Durchgang (20), der die Unebenheit (24) umgeht, miteinander verbunden sind.

7. Elektrohaushaltsgerät zum Zubereiten von Nahrungsmitteln nach einem der Ansprüche 1 bis 6, **dadurch gekennzeichnet, dass** eine Achse (10) des Getriebes oder des Motors zumindest teilweise in der Unebenheit (24) aufgenommen ist.

8. Elektrohaushaltsgerät zum Zubereiten von Nahrungsmitteln nach einem der Ansprüche 1 bis 7, **dadurch gekennzeichnet, dass** die Unebenheit (24) durch eine Längsrippe (18) zur Mitte des Bodens (16) verlängert ist.

9. Elektrohaushaltsgerat zum Zubereiten von Nahrungsmitteln nach einem der Ansprüche 1 bis 8, **dadurch gekennzeichnet, dass** mindestens eine Versteifungsrippe (28, 29) sich ausgehend von der Unebenheit (24) zu einem Seitenrand (15) des Bodens (16) erstreckt.

10. Elektrohaushaltsgerät zum Zubereiten von Nahrungsmitteln nach Anspruch 9, **dadurch gekennzeichnet, dass** der Seitenrand der oder mindestens einer der Versteifungsrippen (28, 29), welcher der Mitte des Bodens am nachsten ist, einen Winkel bildet, der bezüglich einer Linie, welche die Mitte der Unebenheit (24) mit der Mitte des Bodens (16) verbindet, mehr als 90° beträgt.

11. Elektrohaushaltsgerät zum Zubereiten von Nahrungsmitteln nach Anspruch 9 oder 10, **dadurch gekennzeichnet, dass** zumindest ein Teil der oder mindestens einer der Versteifungsrippen (28, 29) einen Winkel bildet, der bezüglich einer Linie, welche die Mitte der Unebenheit (24) mit der Mitte des Bodens (16) verbindet, weniger als 135° beträgt.

12. Elektrohaushaltsgerät zum Zubereiten von Nahrungsmitteln nach einem der Ansprüche 1 bis 11, **dadurch gekennzeichnet, dass** ein Arbeitsbehälter (5), der das Arbeitswerkzeug (13) aufnimmt, auf dem Gehäuse (1) angeordnet ist.

## Claims

1. A household electrical appliance for preparing food, said appliance comprising a housing (1) containing a motor (3) powered via an electrical cord (14) and driving a working tool (13), optionally via a transmission, said household electrical appliance for preparing food being **characterized in that** it further comprises a bottom (16) under the outside face of which at least one off-center piece in relief (24) extends, such as a projection (17) or a rib portion, one half of the bottom (16) being provided with at least two deflector means (25, 26) for deflecting the electrical cord (14), which deflector means are disposed on either side of the piece in relief (24), and the other half of the bottom (16) being provided with at least one deflector means (27) for deflecting the electrical cord (14).

2. A household electrical appliance for preparing food according to claim 1, **characterized in that** at least one of the deflector means (25, 26) is formed by a stud projecting integrally from the bottom (16).

3. A household electrical appliance for preparing food according to claim 1 or claim 2, **characterized in that** at least one of the deflector means (27) is formed by a side edge of an extension to the piece in relief (24).

4. A household electrical appliance for preparing food according to any one of claims 1 to 3, **characterized in that** at least one of the deflector means (25, 26) is provided with a catch (31, 32) organized to retain the electrical cord (14).

5. A household electrical appliance for preparing food according to any one of claims 1 to 4, **characterized in that** the bottom (16) is provided with a cavity (23) organized for stowing the electrical cord (14), and in which the deflector means (25, 26, 27) are disposed.

6. A household electrical appliance for preparing food, said appliance comprising a housing (1) containing a motor (3) powered via an electrical cord (14) and driving a working tool (13), optionally via a transmission, said household electrical appliance for preparing food being **characterized in that** it further comprises a bottom (16) under which a cavity (23) is provided for receiving the electrical cord (14), in which cavity at least one off-center piece in relief (24) extends, such as a projection (17) or a rib portion, the cavity (23) comprising two spaces (21, 22) disposed on either side of the piece in relief (24) and interconnected via a passageway (20) extending around the piece in relief (24).

7. A household electrical appliance for preparing food according to any one of claims 1 to 6, **characterized in that** a shaft (10) of the transmission or of the motor is received at least in part inside the piece in relief (24).

8. A household electrical appliance for preparing food according to any one of claims 1 to 7, **characterized in that** the piece in relief (24) is extended by a longitudinal rib (18) extending towards the center of the bottom (16).

9. A household electrical appliance according to any one of claims 1 to 8, **characterized in that** at least one stiffener rib (28, 29) extends from the piece in relief (24) towards a side edge (15) of the bottom (16).

10. A household electrical appliance according to claim 9, **characterized in that** the side edge of the or of at least one of the stiffener ribs (28, 29) that is closer to the center of the bottom forms an angle of greater than 90° relative to a line connecting the center of the piece in relief (24) to the center of the bottom (16).

11. A household electrical appliance according to claim 9 or claim 10, **characterized in that** at least a portion of the or of at least one of the stiffener ribs (28, 29) forms an angle of less than 135° relative to a line connecting the center of the piece in relief 24) to the center of the bottom (16).

12. A household electrical appliance for preparing food according to any one of claims 1 to 11, **characterized in that** a working receptacle (5) that receives the working tool (13) is disposed on the housing (1).
